# DEMANDE DE BREVET EUROPEEN

(11) **EP 1 619 160 A1**
(43) Date de publication de la demande: **25.01.2006**
(21) Numéro de dépôt: 05356119.7
(22) Date de dépôt: 12.07.2005
(51) Int. Cl.: B66F 9/06

(54) **Procédé de transformation d'un chariot de manutention**

(30) Priorité: 21.07.2004 FR 0408091
(71) Demandeur: Christen, Jacques, 21121 Daix (FR)
(72) Inventeur: Christen, Jacques, 21121 Daix (FR)
(74) Mandataire: Maureau, Philippe

(57) **Abrégé**

La présente invention se rapporte, d'une part, à un procédé de transformation d'un chariot de manutention (1) muni d'organes de commande (8 à 10, 12 à 15) pouvant être actionnés manuellement par un opérateur, caractérisé en ce qu'il comprend une étape visant à installer, de manière réversible à l'emplacement prévu pour l'opérateur, un dispositif (30, 50, 70) apte à agir sur les organes de commande en fonction d'instructions données, et d'autre part, à un dispositif pour mettre en oeuvre ce procédé.

## Description

La présente invention se rapporte, d'une part, à un procédé de transformation d'un chariot de manutention muni d'organes de commande pouvant être actionnés manuellement par un opérateur, et d'autre part, à un dispositif pour la mise en oeuvre de cette transformation.

Il existe actuellement plusieurs systèmes pour gérer de manière plus ou moins efficace le stockage, rangement et déstockage des produits transitant par un entrepôt.

Un premier système est le système manuel bien connu consistant à utiliser des chariots de manutention pilotés par des opérateurs. L'avantage d'un tel système est sa grande souplesse d'utilisation, et son adaptation facile à tous les systèmes d'entreposages quel que soit l'écartement des zones de stockage et leur disposition. Toutefois, ils mobilisent une main d'oeuvre importante, l'efficacité d'un tel système étant en outre variable et dépendant des performances des pilotes.

Des systèmes entièrement automatiques sont également déjà connus. De tels systèmes utilisent des chariots de manutention automatiques pilotés à distance, généralement par radio. Ces systèmes sont fiables, rapides et précis, mais ces avantages sont toutefois limités à l'entrepôt équipé, ces chariots de manutention ne pouvant évoluer dans des zones non couvertes. En effet, la mise en place de ces systèmes requiert l'adaptation de l'entrepôt aux chariots de manutention utilisés, tant au niveau du balisage des passages empruntés par les chariots de manutention qu'au niveau de la standardisation des zones de stockage. Ces systèmes ne permettent en outre pas d'utiliser ces chariots de manutention dans un entrepôt non adapté, ce qui peut représenter une immobilisation importante de matériel et oblige l'industriel à s'équiper également de chariots de manutention manuels pour travailler dans ses entrepôts non équipés. Par ailleurs, le coût très élevé d'un tel système, comprenant l'achat de chariots de manutention automatiques dédiés et l'adaptation de l'entrepôt, est dissuasif pour l'entrepreneur.

Un troisième système repose sur l'utilisation de transtockeurs. Les transtockeurs sont des engins automatiques se déplaçant sur un unique rail de roulement. Ils sont rapides et précis mais leurs déplacements sont limités à ceux que permettent leurs rails support. Ce système doit donc généralement être complété par des chariots de manutention d'appoint, ce qui alourdit encore un investissement déjà dissuasif pour l'entrepreneur en raison, d'une part, du coût élevé de ces engins automatiques dédiés, et d'autre part, de l'adaptation nécessaire de l'entrepôt.

La présente invention a pour but de remédier aux inconvénients précédemment évoqués, et consiste pour cela en un procédé de transformation d'un chariot de manutention muni d'organes de commande pouvant être actionnés manuellement par un opérateur, caractérisé en ce qu'il comprend une étape visant à installer, de manière réversible à l'emplacement prévu pour l'opérateur, un dispositif apte à agir sur les organes de commande en fonction d'instructions données.

Ainsi, en utilisant l'emplacement prévu pour l'opérateur pour y installer, de manière réversible, un dispositif de commande du chariot de manutention, la structure du chariot de manutention n'a pas à être modifiée pour procéder à cette transformation. Le chariot de manutention n'est donc aucunement altéré lors de cette transformation, le procédé conservant les organes existants. Il doit être bien compris que le terme organe de commande comprend tous les organes pouvant servir à piloter le chariot de manutention, tels que, entre autres, le volant, la pédale marche/arrêt, des manettes.

De cette manière, lorsque le chariot de manutention doit être opéré manuellement, il suffit de démonter le dispositif de commande à distance. L'opérateur peut alors reprendre sa place, les organes de commande du chariot de manutention n'ayant pas été modifiés.

De manière préférentielle le procédé comprend une étape visant à installer un système électronique qui, à partir d'une donnée de destination du chariot de manutention, envoie des instructions adaptées pour y conduire ledit chariot de manutention.

Avantageusement, le procédé comprend une étape visant à installer un système de localisation du chariot de manutention.

Avantageusement encore, le procédé comprend une étape visant à démonter un siège prévu pour l'opérateur. De cette manière, le dispositif selon l'invention peut être positionné plus précisément et de manière plus stable.

La présente invention concerne également un dispositif destiné à être utilisé dans la mise en oeuvre des procédés précédents, caractérisé en ce qu'il comprend, d'une part, une interface équipée de moyens de réception d'instructions, et d'autre part, des actionneurs mécaniques, pilotés par l'interface, aptes à agir sur les organes de commande en fonction des instructions reçues.

Ainsi, en prévoyant des actionneurs capables d'agir directement sur les organes de commande existants, il est possible de construire un dispositif distinct du chariot de manutention à automatiser qui peut donc être facilement installé ou démonté sans nécessiter de modifications profondes et irréversibles dudit chariot de manutention.

Avantageusement, les moyens de réception d'instructions sont des moyens de réception radio. Il est toutefois bien évidemment possible de prévoir un ensemble de trajets préprogrammés dont l'un sera activé au départ du chariot de manutention.

De manière préférentielle, un dispositif selon l'invention comprend un module principal abritant l'interface.

Avantageusement, il comprend au moins un module satellite relié au module principal et abritant au moins un actionneur. La mise en place des actionneurs dans des modules satellites permet d'améliorer l'adaptabilité du dispositif et de le rendre moins dépendant des paramètres physiques du chariot de manutention à automatiser, tels que les distances entre les différents organes de commande.

Selon une première variante de réalisation de l'invention, le module satellite est relié au module principal par l'intermédiaire d'un bras articulé.

Selon une deuxième variante de réalisation de l'invention, le module satellite est fixé sur le chariot de manutention et relié au module principal par un câble. Bien qu'une telle variante demande de fixer les modules satellites sur le chariot de manutention, cette transformation n'est pas irréversible et permet de positionner les actionneurs de manière à ce qu'ils coopèrent au mieux avec les organes de commande, gagnant ainsi en fiabilité.

Avantageusement, les actionneurs sont reliés à des capteurs renvoyant leur statut.

Avantageusement encore, l'interface est reliée à un commutateur de mise sous tension du chariot de manutention.

De manière préférentielle, le dispositif selon l'invention est alimenté par une batterie propre. Bien que possible, une alimentation par piquage hydraulique, pneumatique, ou électrique sur le réseau ou la batterie du chariot de manutention n'est pas souhaitée. En effet, un tel mode d'alimentation demanderait une modification du chariot de manutention tel qu'originalement conçu, ce qui est précisément ce que la présente invention souhaite éviter afin de permettre une transformation réversible.

La mise en oeuvre de l'invention sera mieux comprise à l'aide de la description détaillée qui est exposée ci-dessous en regard du dessin annexé dans lequel :
La figure 1 est une représentation schématique en perspective avant d'un chariot de manutention automatisé au moyen d'un dispositif selon un premier mode de réalisation.
La figure 2 est une représentation schématique en perspective arrière du chariot de manutention équipé du dispositif de la figure 1.
La figure 3 est une représentation en perspective avant du chariot de manutention de la figure 1 automatisé au moyen d'un dispositif selon un deuxième mode de réalisation.
La figure 4 est une représentation schématique en perspective arrière du chariot de manutention équipé du dispositif de la figure 3.
La figure 5 est une représentation en perspective avant du chariot de manutention de la figure 1 automatisé au moyen d'un dispositif selon un troisième mode de réalisation.
La figure 6 est une représentation schématique en perspective arrière du chariot de manutention équipé du dispositif de la figure 5.

Un chariot de manutention 1 destiné à une conduite manuelle possède une structure comportant une caisse 2 et une cabine 3 formée au moyen de deux montants avant 4 et deux montants arrières 5 reliés entre eux par deux montants latéraux 6 et deux montants transversaux 7.

La caisse 2, abrite des éléments moteurs (non visibles) contrôlés par des organes de commande manuels. Ces organes de commande comprennent, sans s'y limiter, un volant 8, une pédale d'accélération 9, une pédale de frein 10, un commutateur 11 destiné à coopérer avec une clé de contact, et des manettes 12, 13, 14, 15 commandant les divers mouvements d'une fourche de levage (non représentée).

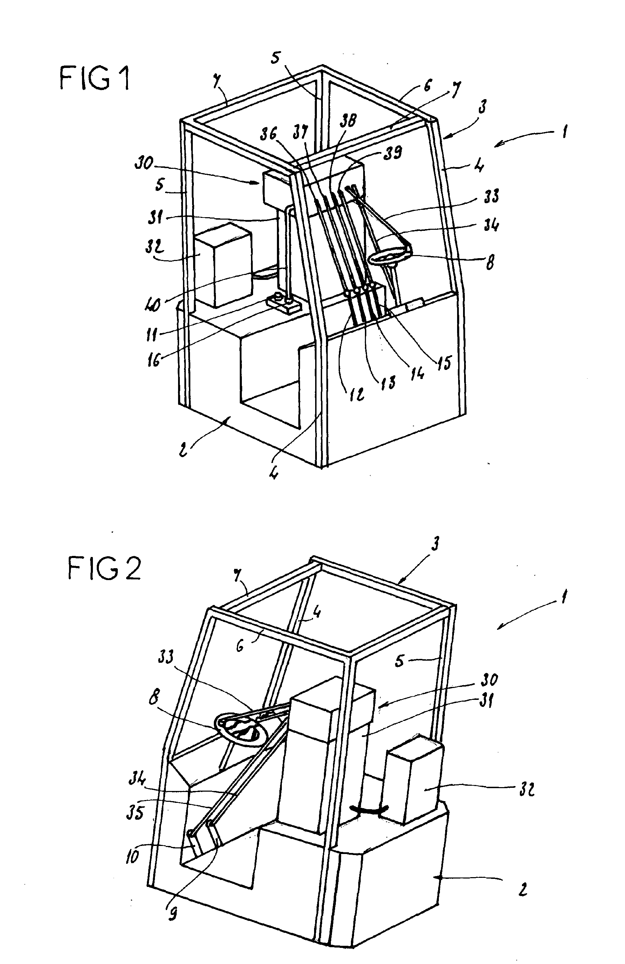

Un dispositif 30 selon un premier mode de réalisation de l'invention, tel que représenté sur les figures 1 et 2, comprend un module principal 31 et une batterie 32 fournissant l'énergie électrique nécessaire.

Le module principal 31 abrite, d'une part, des moyens de communication radio (non visibles), et d'autre part, une interface de commande (non visible). L'interface de commande est connectée à des actionneurs mécaniques 33 à 39, destinés à agir chacun sur un des organes de commande 8 à 10, 12 à 15.

Les actionneurs mécaniques 33 à 39 sont réalisés sous la forme de tiges rigides connectées à un mécanisme les animant du mouvement désiré. Ainsi, l'actionneur mécanique 33, destiné à agir sur le volant 8 sera, selon l'ordre de l'interface, animé d'un mouvement permettant la rotation du volant de l'angle désiré. Les actionneurs mécaniques 34, 35 destinés à agir respectivement sur la pédale d'accélération 9 et la pédale de frein 10, seront animés d'un mouvement leur permettant d'appuyer plus ou moins sur lesdites pédales 9, 10. Enfin, les actionneurs 36 à 39, destinés à agir sur les manettes 12 à 15, seront chacun indépendamment animés d'un mouvement leur permettant de tirer ou pousser la manette correspondante.

Pour des raisons de sécurité, un actionneur mécanique 40 est placé de manière à pouvoir venir appuyer sur un bouton d'arrêt d'urgence 16.

Par ailleurs, le module principal 31 est relié au commutateur 11 de mise en route du chariot de manutention 1, de manière à empêcher tout fonctionnement du dispositif 30 si le chariot de manutention 1 est éteint.

Il convient de noter que le module principal 31 du dispositif 30 est installé à la place d'un siège initialement prévu pour le conducteur, de manière à ce que les actionneurs mécaniques 33 à 39 se situent en face de leurs organes de commande 8 à 10 et 12 à 15 respectifs. Ce module principal 31 peut toutefois être conçu de manière à pouvoir être posé sur le siège sans que ce dernier soit démonté. Cependant, une telle fixation sera moins précise et les actionneurs mécaniques 33 à 39 risquent de s'en trouver légèrement désaxés.

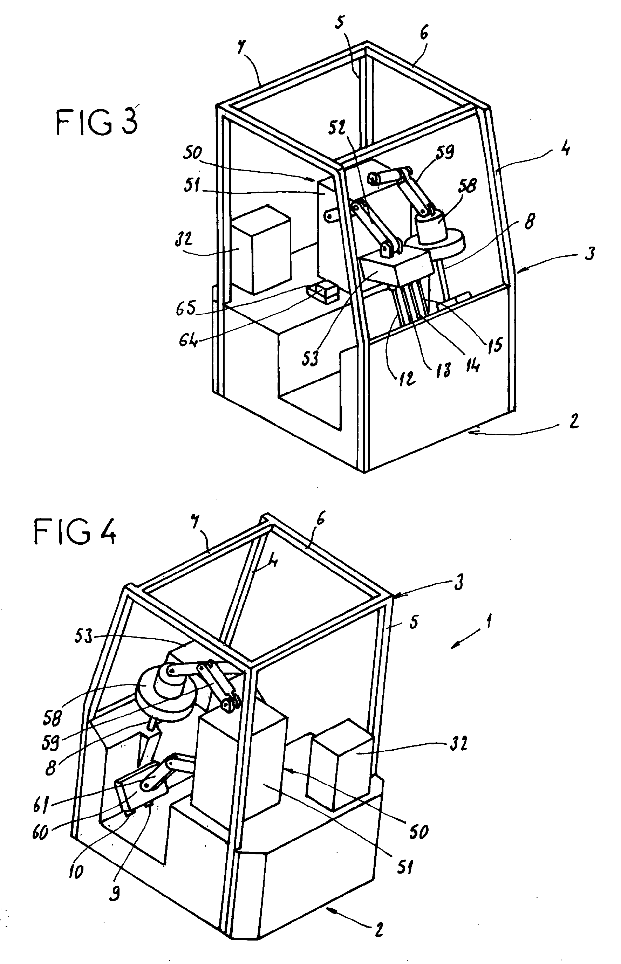

Selon un deuxième mode de réalisation, un dispositif 50, tel que représenté équipant un chariot de manutention 1 sur les figures 3 et 4, diffère du dispositif 30 par le fait qu'il comprend un module principal 51 ne supportant directement aucun actionneur mécanique.

Le module principal 51 abrite, comme le module principal 31, d'une part, des moyens de communication radio (non visibles), et d'autre part, une interface de commande (non visible). Un premier module satellite 53 est relié au module principal 51 par l'intermédiaire d'un bras 52 articulé verrouillable. Ce module satellite 53 est destiné à venir coiffer les manettes 12 à 15 et intègre des actionneurs aptes à agir sur lesdites manettes 12 à 15. Un deuxième module satellite 58 abrite un actionneur destiné à agir sur le volant 8. Ce deuxième module satellite 58 est également relié au module principal 51 par l'intermédiaire d'un bras 59 articulé verrouillable. Enfin, un troisième module satellite 60, destiné aux pédales d'accélération 9 et de frein 10 est prévu. Ce module satellite 60 est relié au module principal 51 par un bras 61 articulé verrouillable et comporte deux actionneurs aptes à agir respectivement sur la pédale d'accélération 9 et la pédale de frein 10.

Le verrouillage des bras 52, 59, 61 pourra, par exemple, être effectué en les équipant d'articulation blocables par dents de souris.

En outre, un module accessoire 64 comportant un actionneur mécanique 65 est prévu pour s'adapter sur le bouton d'arrêt d'urgence 16.

Lors de l'installation d'un dispositif 50, les bras 52, 59, 61 articulés permettent un positionnement amélioré des modules satellites et donc des actionneurs qui y sont intégrés.

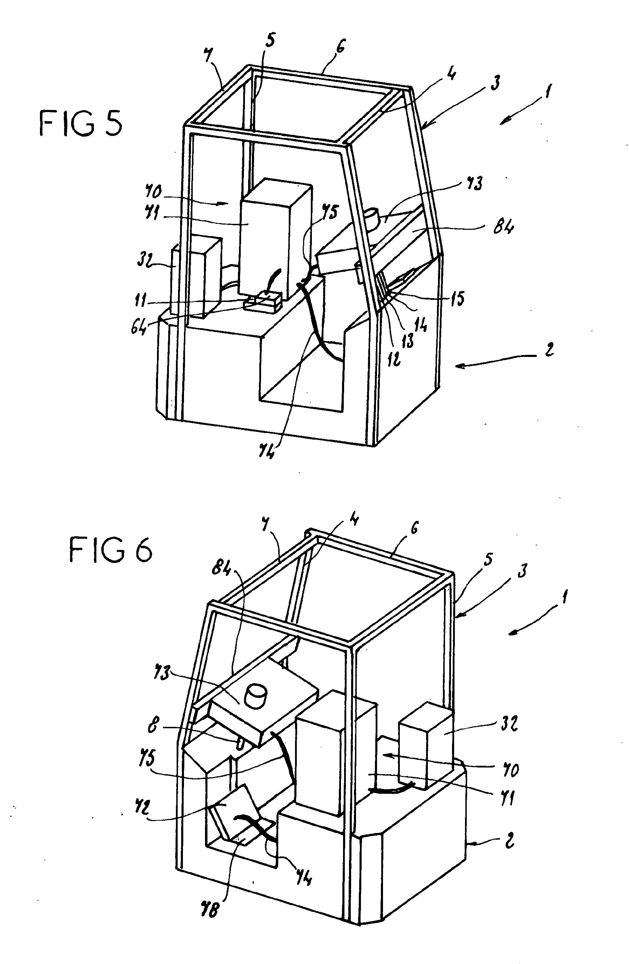

Selon un troisième mode de réalisation, un dispositif 70, tel que représenté équipant un chariot de manutention 1 sur les figures 5 et 6, diffère des dispositifs 30, 50 par le fait qu'il comprend un module principal 71 auquel sont rattachés deux modules satellites 72, 73 par l'intermédiaire de câbles 74, 75 d'alimentation et de commande, les modules satellites étant fixés sur la structure du chariot de manutention 1.

Le module principal 71 abrite, d'une part, des moyens de communication radio (non visibles), et d'autre part, une interface de commande (non visible). Le premier module satellite 72 intègre des actionneurs destinés respectivement à agir sur la pédale d'accélération 9 et la pédale de frein 10. Ce module satellite 71 comporte en outre une platine 78 de fixation permettant son rattachement à la caisse 2 du chariot de manutention de manière à ce que les actionneurs puissent remplir leur rôle. Le deuxième module satellite 73 intègre, quant à lui, des actionneurs destinés à agir sur le volant 8 et sur les manettes 12 à 15. Ce module satellite 73 possède une barre 84 destinée à permettre sa fixation sur les montants avant 4, une fois celui-ci correctement positionné.

Il convient de noter que le module principal 71 peut être placé indifféremment sur le siège prévu pour le conducteur ou directement sur la caisse 2 après démontage dudit siège. En effet, les modules satellites 72, 73 étant reliés au module principal 71 par des liaisons souples 74, 75, le positionnement du module principal 71 n'est pas déterminant quant à l'alignement correct des actionneurs contrairement aux dispositifs 30, 50 précédemment décrits.

Le pilotage d'un chariot de manutention 1 automatisé respectivement avec un dispositif 30, 50, 70 s'effectue à distance par la transmission d'instructions de pilotage captées par les moyens de réception radio du module principal 31, 51, 71. Ces instructions sont ensuite interprétées par l'interface de commande qui les transforme en ordres à destination des actionneurs. Il est bien évidemment possible de prévoir qu'un numéro d'identification du chariot de manutention 1 est envoyé avec chaque instruction afin que seul le chariot de manutention 1 concerné réagisse à cet ordre. Le chariot de manutention pourra être conduit visuellement par l'intermédiaire de caméras filmant l'entrepôt, mais il pourra être avantageusement équipé d'un système de localisation permettant de connaître à chaque instant son positionnement dans l'entrepôt. Un tel système permet en outre de programmer les déplacements à effectuer, et donc les instructions à envoyer, à partir de l'entrée dans un système informatique de la référence d'un emplacement de stockage.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de transformation d'un chariot de manutention (1) muni d'organes de commande (8 à 10, 12 à 15) pouvant être actionnés manuellement par un opérateur, **caractérisé en ce qu'**il comprend une étape visant à installer, de manière réversible à l'emplacement prévu pour l'opérateur, un dispositif (30, 50, 70) apte à agir sur tous les organes de commande en fonction d'instructions reçues par une interface équipée de moyens de réception d'instructions.

2. Procédé selon la revendication 1, **caractérisé en ce qu'**il comprend un étape visant à installer un système électronique qui, à partir d'une donnée de destination du chariot de manutention (1), envoie des instructions adaptées pour y conduire ledit chariot de manutention.

3. Procédé selon l'une quelconque des revendications 1 ou 2, **caractérisé en ce qu'**il comprend une étape visant à installer un système de localisation du chariot de manutention (1).

4. Procédé selon l'une quelconque des revendications 1 à 3, **caractérisé en ce qu'**il comprend une étape visant à démonter un siège prévu pour l'opérateur.

5. Dispositif (30, 50, 70) destiné à être utilisé dans un procédé selon l'une quelconque des revendications 1 à 4, **caractérisé en ce qu'**il comprend, d'une part, une interface équipée de moyens de réception d'instructions, et d'autre part, des actionneurs mécaniques (34 à 39), pilotés par l'interface, aptes à agir sur les organes de commande (8 à 10, 12 à 15) en fonction des instructions reçues.

6. Dispositif (30, 50, 70) selon la revendication 5, **caractérisé en ce que** les moyens de réception d'instructions sont des moyens de réception radio.

7. Dispositif (30, 50, 70) selon l'une quelconque des revendications 5 ou 6, **caractérisé en ce qu'**il comprend un module principal (31, 51, 71) abritant l'interface.

8. Dispositif (50, 70) selon la revendication 7, **caractérisé en ce qu'**il comprend au moins un module satellite (53, 58, 60, 72, 73) relié au module principal (51, 71) et abritant au moins un actionneur.

9. Dispositif (50) selon la revendication 8, **caractérisé en ce que** le module satellite (53, 58, 60) est relié au module principal (51) par l'intermédiaire d'un bras articulé (52, 59, 61).

10. Dispositif (70) selon la revendication 8, **caractérisé en ce que** le module satellite (72, 73) est rattaché au chariot de manutention (1) et relié au module principal (71) par un câble (74, 75).

11. Dispositif (30, 50, 70) selon l'une quelconque des revendications 5 à 10, **caractérisé en ce que** les actionneurs (34 à 39) sont reliés à des capteurs renvoyant leurs statut.

12. Dispositif (30, 50, 70) selon l'une quelconque des revendications 5 à 11, **caractérisé en ce que** l'interface est reliée à un commutateur de mise sous tension (11) du chariot de manutention (1).

13. Dispositif (30, 50, 70) selon l'une quelconque des revendications 5 à 12, **caractérisé en ce qu'**il est alimenté par une batterie propre (32).
